# EUROPÄISCHE PATENTANMELDUNG

(11) **EP 0 832 806 A1**
(43) Veröffentlichungstag der Anmeldung: **01.04.1998**
(21) Anmeldenummer: 97115010.7
(22) Anmeldetag: 29.08.1997
(51) Int. Cl.: B62D 1/06

(54) **Lenkrad mit integrierter Lenkradheizung**

(30) Priorität: 27.09.1996 DE 29616918 U
(71) Anmelder: TRW Occupant Restraint Systems GmbH, 73553 Alfdorf (DE)
(72) Erfinder: Fischer, Anton, 73572 Heuchlingen (DE)
(74) Vertreter: Kitzhofer, Thomas, Dipl.-Ing.

(57) **Zusammenfassung**

Ein Lenkrad mit einer integrierten, wenigstens einen Heizdraht (13) umfassenden Lenkradheizung, ist dadurch gekennzeichnet, daß der Lenkradkranz (3) unter seinem Außenbezug (11) eine Schicht (9) aus thermoplastischem Kunststoff aufweist, in die der Heizdraht (13) eingeschmolzen ist.

## Beschreibung

Die Erfindung betrifft ein Lenkrad mit einer integrierten, wenigstens einen Heizdraht umfassenden Lenkradheizung.

Die Heizdrähte einer Lenkradheizung werden bislang während des Umschäumens des Lenkradskeletts in die entsprechende Form eingelegt und positioniert, was aufwendig ist.

Die Erfindung schafft ein Lenkrad mit einer integrierten Lenkradheizung, das wesentlich einfacher und kostengünstiger hergestellt werden kann. Dies wird bei einem Lenkrad der eingangs genannten Art erfindungsgemäß dadurch erreicht, daß der Lenkradkranz unter seinem Außenbezug eine Schicht aus thermoplastischem Kunststoff aufweist, in die der Heizdraht eingeschmolzen ist. Beim erfindungsgemäßen Lenkrad ist es deshalb nicht mehr notwendig, daß die Heizdrähte während der Herstellung der Ummantelung des Lenkradskeletts aufwendig in einer Form positioniert und umschäumt werden müssen.

Die Ummantelung des Lenkradskeletts besteht erfindungsgemäß aus thermoplastischem Kunststoff, der es erlaubt, daß der Heizdraht nach dem Herstellen der Ummantelung bei Anlegen einer Heizspannung in die Schicht aus thermoplastischem Kunststoff einschmelzen kann. Die Heizdrähte sind damit lagesicher in die Schicht aus thermoplastischem Kunststoff eingebettet.

Gemäß einer bevorzugten Ausführungsform schließt der Heizdraht außenseitig bündig mit der Schicht aus thermoplastischem Kunststoff ab. Da die Schicht aus Kunststoff noch von einem Außenbezug umgeben ist, ist der Heizdraht so möglichst nahe am Außenbezug angeordnet und ermöglichen eine gute Heizwirkung bei niedrigem Heizstrom. Zudem zeichnet sich der Heizdraht auf der Außenseite des Außenbezugs nicht ab oder kann beim Greifen des Lenkrads ertastet werden.

Ferner kann der Lenkradkranz vollständig mit thermoplastischem Kunststoff umspritzt sein, d.h. daß keine Umschäumung mehr notwendig ist.

Ein einfaches Aufbringen des Heizdrahts ist ferner dadurch möglich, daß dieser zickzackförmig im Lenkradkranz verläuft. Der Heizdraht wird bei dieser Ausführungsform nicht um den Lenkradkranz gewickelt, was fertigungstechnisch wesentlich aufwendiger wäre.

Weitere Merkmale und Vorteile der Erfindung ergeben sich aus der nachfolgenden Beschreibung und aus den Zeichnungen, auf die Bezug genommen wird. In den Zeichnungen zeigen:
- Figur 1 einen Querschnitt durch eine Ausführungsform des erfindungsgemäßen Lenkrads im Bereich des Lenkradkranzes;
- Figur 2 den einzuschmelzenden Heizdraht in vorkonfektioniertem Zustand; und
- Figur 3 eine schematische Ansicht des Werkzeugs, mit dem der Heizdraht auf den Lenkradkranz aufgepreßt wird.

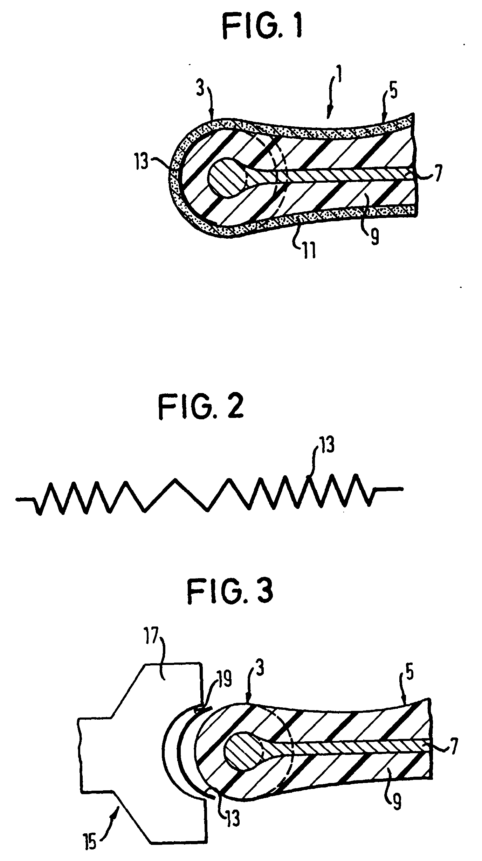

In Figur 1 ist der Außenbereich eines Lenkrads 1 gezeigt, das einen Lenkradkranz 3 umfaßt, von dem aus sich Speichen 5 zur nicht gezeigten Lenkradnabe erstrecken. Ein im Inneren des Lenkrads vorgesehenes Lenkradskelett 7 sorgt für die Steifigkeit des Lenkrads 1 und ist mit einer dicken Schicht 9 aus thermoplastischem Kunststoff vollständig umspritzt. Die Schicht 9 wird von einem Außenbezug 11, z.B. aus Kunst- oder Naturleder, ummantelt, der eine griffige, haptisch angenehme und weiche Oberfläche aufweist.

In das Lenkrad 1 ist eine Lenkradheizung integriert. Hierzu ist ein zickzackförmig gebogener Heizdraht 13 vorgesehen, wie er in Figur 2 in noch nicht eingebautem, sondern vorkonfektioniertem Zustand gezeigt ist.

Der Heizdraht 13 ist in die Schicht 9 im Bereich der nach außen weisenden Oberfläche des Lenkradkranzes 3 eingeschmolzen und verläuft über den gesamten Außenrand des Lenkradkranzes 3 herum. Außenseitig schließt der Heizdraht 13 mit der Schicht 9 bündig ab und steht damit gegenüber der Schicht 9 nicht vor. Er kann deshalb auch von dem Fahrzeuglenker durch den Außenbezug 11 hindurch nicht ertastet werden.

Das Lenkrad 1 wird folgendermaßen hergestellt: Zuerst wird das Lenkradskelett 7 mit thermoplastischem Kunststoff, der die Schicht 9 bildet, umspritzt. Nach dem Aushärten der Schicht 9 wird der Heizdraht 13 um den Lenkradkranz 3 gelegt und mit einem Preßwerkzeug 15 (vgl. Figur 3) geringfügig in die Oberfläche der Schicht 9 gepreßt. Hierzu hat das Preßwerkzeug 15 eine Backe 17 aus Teflon, die eine Einbuchtung 19 aufweist, welche komplementär zum Lenkradkranz 3 im radial äußeren Bereich geformt ist. Gleichzeitig wird an den Heizdraht 13 eine elektrische Spannung angelegt, wobei die Stromstärke höher als im späteren Heizbetrieb ist. Dies führt dazu, daß die Schicht 9 lokal geschmolzen wird und der Heizdraht 13 bei Aufrechterhaltung des Druckes des Preßwerkzeugs in die Schicht 9 einsinkt. Der so eingeschmolzene Heizdraht 13 ist nach dem Aushärten der Schicht 9 lagefest in diese eingebettet.

Anschließend wird der Außenbezug 11 über die Schicht 9 geklebt.

Da der Heizdraht 13 unmittelbar an die Innenseite des Außenbezugs 11 angrenzt, ergibt sich trotz niedrigem Heizstrom eine gute Heizwirkung.

## Patentansprüche

1. Lenkrad mit einer integrierten, wenigstens einen Heizdraht (13) umfassenden Lenkradheizung, dadurch gekennzeichnet, daß der Lenkradkranz (3) unter seinem Außenbezug (11) eine Schicht (9) aus thermoplastischem Kunststoff aufweist, in die der Heizdraht (13) eingeschmolzen ist.

2. Lenkrad nach Anspruch 1, dadurch gekennzeichnet, daß der Heizdraht (13) außenseitig im wesentlichen bündig mit der Schicht (9) aus thermoplastischem Kunststoff abschließt.

3. Lenkrad nach Anspruch 1 oder 2, dadurch gekennzeichnet, daß zumindest der Lenkradkranz (3) vollständig mit thermoplastischem Kunststoff umspritzt ist.

4. Lenkrad nach einem der vorstehenden Ansprüche, dadurch gekennzeichnet, daß der Heizdraht (13) zickzackförmig im Lenkradkranz (3) verläuft.
